(19) Europäisches Patentamt

European Patent Office

Office européen des brevets

(11) **EP 1 442 570 B1**

(12) **EUROPÄISCHE PATENTSCHRIFT**

(45) Veröffentlichungstag und Bekanntmachung des Hinweises auf die Patenterteilung:
**04.05.2005 Patentblatt 2005/18**

(21) Anmeldenummer: 02792587.4

(22) Anmeldetag: **31.10.2002**

(51) Int Cl.⁷: **H04L 25/03**

(86) Internationale Anmeldenummer:
**PCT/DE2002/004065**

(87) Internationale Veröffentlichungsnummer:
**WO 2003/041349 (15.05.2003 Gazette 2003/20)**

(54) **VITERBI-ENTZERRUNG UNTER VERWENDUNG EINES TABELLENSPEICHERS ZUR BEREITHALTUNG VON REKONSTRUIERTEN SIGNALWERTEN FÜR DIE BERECHNUNG VON ÜBERGANGSMETRIKEN**

VITERBI DECODING USING A TABLE MEMORY FOR READYING RECONSTRUCTED SIGNAL VALUES FOR THE CALCULATION OF TRANSFORMATION METRICS

EGALISATION PAR L'ALGORITHME DE VITERBI AU MOYEN D'UN ENSEMBLE DE TABLES POUR MAINTENIR A DISPOSITION DES VALEURS DE SIGNAUX RECONSTRUITES SERVANT AU CALCUL DE METRIQUES DE TRANSITION

(84) Benannte Vertragsstaaten:
**DE**

(30) Priorität: **09.11.2001 DE 10155061**

(43) Veröffentlichungstag der Anmeldung:
**04.08.2004 Patentblatt 2004/32**

(73) Patentinhaber: **Infineon Technologies AG 81669 München (DE)**

(72) Erfinder:
• **NAIR, Anish 56022 Bangalore (IN)**
• **NATH, Santosh 560017 Bangalore (IN)**

(74) Vertreter: **Lange, Thomas, Dr. et al Patentanwälte Lambsdorff & Lange, Dingolfinger Strasse 6 81673 München (DE)**

(56) Entgegenhaltungen:
**WO-A-00/10299**          **WO-A-98/27701**

• **DUEL-HALLEN A ET AL: "DELAYED DECISION-FEEDBACK SEQUENCE ESTIMATION" IEEE TRANSACTIONS ON COMMUNICATIONS, IEEE INC. NEW YORK, US, Bd. 37, Nr. 5, 1. Mai 1989 (1989-05-01), Seiten 428-436, XP000670554 ISSN: 0090-6778**
• **KENNEY J G ET AL: "Parallel architecture for multilevel decision feedback equalization" IEEE TRANSACTIONS ON MAGNETICS, IEEE INC. NEW YORK, US, Bd. 34, Nr. 2, März 1998 (1998-03), Seiten 588-595, XP002099093 ISSN: 0018-9464**

**Beschreibung**

Viterbi-Entzerrung unter Verwendung eines Tabellenspeichers zur Bereithaltung von rekonstruierten Signalwerten für die Berechnung von Übergangsmetriken

Die Erfindung betrifft ein Verfahren zum Entzerren eines über einen Kanal übertragenen Datensignals nach dem Viterbi-Algorithmus sowie eine Vorrichtung zu diesem Zweck.

Bei einer Funkübertragung müssen die über die Luftschnittstelle übertragenen Datensignale einer adaptiven Entzerrung unterzogen werden, um die Eigenschaften des physikalischen Übertragungskanals zu berücksichtigen. Schwierigkeiten bei der Signaldetektion bereitet insbesondere die Mehrwegeausbreitung des übertragenen Datensignals, welche Intersymbolinterferenz (ISI) zur Folge hat.

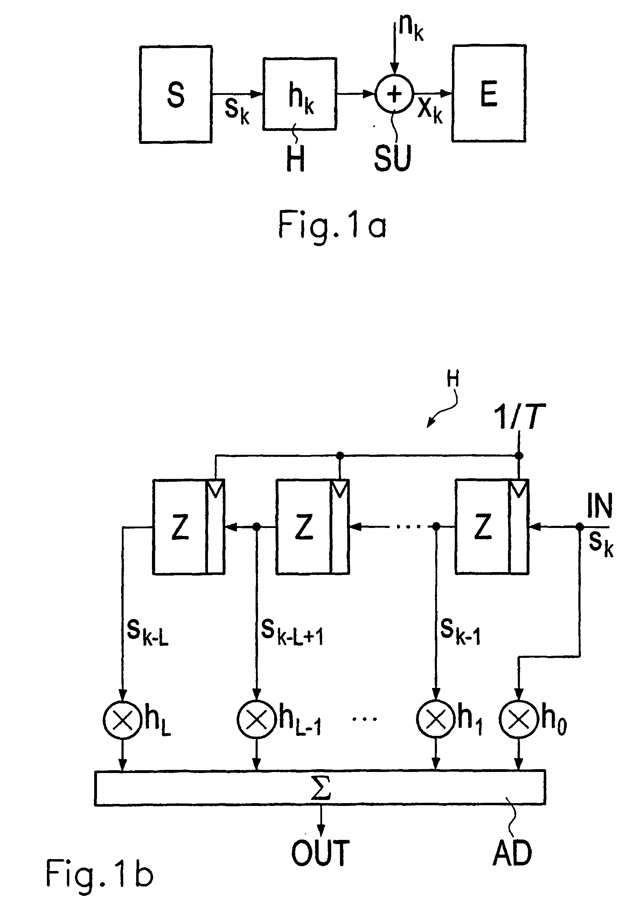

Der Mehrwege-Übertragungskanal zwischen einem Sender S und einem Empfänger E kann als ein Übertragungsfilter H mit Kanalkoeffizienten $h_k$ modelliert werden, wie dies in Fig. 1a dargestellt ist. Der Sender S speist Sendedaten bzw. Sendesymbole $s_k$ in den Übertragungskanal, d.h. das Übertragungsfilter H, ein. Durch einen Modellsummierer SU kann ein additives Rauschsignal $n_k$ berücksichtigt werden, welches den mit $h_k$ gefilterten Sendesymbolen $s_k$ am Ausgang des Übertragungsfilters H hinzuaddiert wird.

Der Index k bezeichnet die diskrete Zeit, dargestellt durch Zeitschritte. Die durch das Übertragungsfilter H gefilterten und mit Rauschen überlagerten Sendesignale $s_k$ werden als Empfangssignal $x_k$ durch den Empfänger empfangen. Es gilt:

$$x_k = \sum_{i=0}^{L} h_i s_{k-i} + n_k \qquad (1)$$

wobei L die Ordnung des durch das Filter H modellierten Übertragungskanals darstellt. Wie aus Gleichung 1 erkennbar, liegt ISI vor, da $x_k$ nicht nur von $s_k$ sondern auch von $s_{k-1},...,s_{k-L}$ abhängt.

Im Empfänger E sind die empfangenen Signalwerte $x_k$ als Abtastwerte bekannt und die Kanalimpulsantworten $h_0,h_1,...,h_L$ des Kanals werden in regelmäßigen Zeitabständen geschätzt. Die Entzerrungsaufgabe besteht darin, aus diesen Informationen die Sendesymbole $s_k$ zu berechnen. Im folgenden wird die Entzerrung mittels eines Viterbi-Entzerrers betrachtet.

Viterbi-Entzerrer sind rekursive MLSE-(Maximum Likelihood Sequence Estimation-)Folgenschätzer. Die Folgenschätzung beruht auf dem Auffinden eines kürzesten Wegs durch ein Zustandsdiagramm des Kanals, welches als Trellis-Diagramm bekannt ist. In dem Trellis-Diagramm sind die Kanalzustände über der diskreten Zeit k aufgetragen. Gemäß dem Viterbi-Algorithmus wird für jeden möglichen Übergang zwischen zwei Zuständen (Vorgänger-Zustand → Zielzustand) eine Übergangsmetrik berechnet, welche ein Maß für die Wahrscheinlichkeit des Übergangs darstellt. Anschließend werden die Übergangsmetriken den jeweiligen Zustandsmetriken der Vorgänger-Zustände hinzuaddiert und es werden die auf diese Weise erhaltenen Summen verglichen. Derjenige Übergang, dessen Summe aus Übergangsmetrik und Metrik des Vorgänger-Zustands minimal ist, wird ausgewählt und bildet die Verlängerung des in diesen Vorgänger-Zustand führenden Pfads in den Zielzustand. Diese drei Operationen werden als ACS-(ADD-COMPARE-SELECT-)Operationen bezeichnet.

Der Viterbi-Algorithmus bewirkt, dass die Anzahl der Pfade durch das Trellis-Diagramm mit wachsendem k (d.h. mit Zeitablauf) konstant bleibt. Dies ermöglicht die rechnerische Lösung der MLSE.

Der Rechenaufwand des Viterbi-Algorithmus erhöht sich exponentiell mit L. Dies beruht darauf, dass die Anzahl der Kanalzustände im Trellis-Diagramm $m^L$ beträgt. Dabei bezeichnet m die wertigkeit der betrachteten Datensymbole.

Zur Erhöhung der Datenrate werden in jüngster Zeit zunehmend höherwertige Symbole (z.B. 8PSK-Symbole, d.h. Phase Shift Keying mit m = 8) anstelle binärer Symbole (m = 2) eingesetzt. Dies verschärft den Rechenaufwand bei der Viterbi-Entzerrung beträchtlich.

Auf Seiten der Hardware wird versucht, den steigenden Rechenbedarf mittels schneller Hardware-Datenpfade (Coprozessoren) zu bewältigen. Diese auch als "Viterbi-Supports" bezeichneten Hardware-Bausteine führen die Berechnung der ACS-Operationen teilweise oder vollständig in Hardware aus. Ein derartiger Entzerrer ist beispielsweise in der internationalen Patentanmeldung WO 00/70614 beschrieben.

Die Methode der Entscheidungsrückkopplung (DF: Decision-Feedback) ist ein algorithmischer Ansatz zur Reduzierung des Rechenaufwands. Beim DF-Verfahren wird dem Viterbi-Algorithmus ein reduziertes Trellis-Diagramm zugrunde gelegt, das heißt ein Trellis-Diagramm, in welchem nicht alle sondern nur ein Teil der $m^L$ Kanalzustände berücksichtigt ist. Bei einer Reduzierung des Trellis-Diagramms auf $m^{L_T}$ Trellis-Zustände mit $L_T < L$ werden die verbleibenden $L-L_T$ Kanalkoeffizienten lediglich für die Berechnung der Übergangsmetriken im reduzierten Trellis-Diagramm (nicht jedoch für die Definition von Zuständen) verwendet.

Stets muss jedoch für jeden in Frage kommenden Übergang zwischen zwei Zuständen eine Übergangsmetrik berechnet werden. Die Übergangsmetrik ist der euklidsche Abstand zwischen dem gemessenen Signalwert $x_k$ und einem rekonstruierten "hypothetischen" Signalwert, welcher bezüglich der zwei den Übergang charakterisierenden Zustände (Vorgänger-Zustand, Zielzustand) unter Berücksichtigung der Kanalkenntnis im Empfänger berechnet wird. Die praktische Durchführung der Berechnung der Übergangsmetriken in Abhängigkeit von dem Systemkonzept (insbesondere der Aufgabenverteilung zwischen Hardware und Software) ist von entscheidender Bedeutung für den Aufwand, der für die Viterbi-Entzerrung zu treiben ist.

In der Schrift WO 00/10299 ist ein DF-Verfahren zur Viterbi-Entzerrung beschrieben, bei welchem die Trellis-Beiträge und die DF-Beiträge in separaten Tabellenspeichern abgelegt werden. Bei der Prozessierung der ACS-Operationen werden die Speicher geeignet adressiert, der jeweilige Trellis-Beitrag und DF-Beitrag ausgelesen und für die Berechnung des Übergangsmetrikwertes kombiniert.

Der Erfindung liegt die Aufgabe zugrunde, ein DF-Verfahren zur Viterbi-Entzerrung zu schaffen, das den Rechenaufwand für die Berechnung der Übergangsmetriken reduziert. Ferner zielt die Erfindung darauf ab, eine Vorrichtung zum Viterbi-Entzerren eines Datensignals mit geringem Rechenaufwand zu schaffen. Insbesondere soll infolge des geringen Rechenaufwands eine Einsparung von Hardware möglich werden.

Nach Anspruch 1 werden im Trellis-Zustandsdiagramm $L_T$ Symbole zur Definition eines Trellis-Zustands (es ergeben sich dann $m^{L_T}$ Trellis-Zustände) berücksichtigt und bei der Kanalschätzung L+1 Kanalparameter $h_o, h_1, ..., h_L$ ermittelt wobei $L > L_T$ ist. Das heißt, das Trellis-Diagramm ist reduziert ($L > L_T$). Für jeden der möglichen Zustandsübergänge im Trellis-Diagramm wird vorab genau ein Trellis-Beitrag für den rekonstruierten Signalwert zu diesem Zustandsübergang berechnet- Die $m^{L_T+1}$ Trellis-Beiträge werden in einem ersten Tabellenspeicher abgespeichert. Ferner werden vor der Durchführung der ACS-Operationen über mehrere Zeitschritte bis zur nächsten Schätzung von Kanalparametern die Schritte des Berechnens von $m^{df}$ Entscheidungsrückkopplungsbeiträgen zu den Übergangsmetriken basierend auf den Kanalparametern $h_{L_T+1}, ..., h_L$ und des Abspeicherns der Entscheidungsrückkopplungsbeiträge in einem zweiten Tabellenspeicher durchgeführt. Vor der Durchführung der ACS-Operationen für den betrachteten Zeitschritt k werden die Entscheidungsrückkopplungsbeiträge in einen dritten Tabellenspeicher mit Zustands-indexierter Adresse umgespeichert. Diese Umspeicherung muss für jeden Zeitschritt k erneut durchgeführt werden. Bei der Durchführung der ACS-Operationen wird der für die Berechnung einer Übergangsmetrik benötigte rekonstruierte Signalwert durch einen Zugriff auf den ersten Tabellenspeicher und den dritten Tabellenspeicher ermittelt.

Der Vorteil des erfindungsgemäßen Verfahrens besteht darin, dass beim Berechnen jeder Übergangsmetrik der rekonstruierte Signalwert durch einfaches Auslesen zweier Speicherplätze ermittelt wird. Dabei müssen die im ersten Tabellenspeicher abgelegten Trellis-Beiträge lediglich nach einer Kanalneuschätzung aktualisiert werden, das heißt bleiben in der Regel über eine Vielzahl von Zeitschritten unverändert. Vorteilhaft ist ferner, dass die Umspeicherung jeweils so vorgenommen werden kann, dass der dritte Tabellenspeicher im Rahmen der Abarbeitung der ACS-Operationen dann in jedem Zeitschritt (genauso wie der erste Tabellenspeicher) durch Inkrementieren bzw. Dekrementieren der Speicheradresse ausgelesen werden kann.

Eine besonders bevorzugte Ausgestaltung des erfindungsgemäßen Verfahrens kennzeichnet sich dadurch, dass die Trellis-Beiträge im ersten Tabellenspeicher in Bezug auf einen Zustandsindex v unter fortlaufenden Speicheradressen, insbesondere den Adressen $Adr = j+(v-1)*m$, bei einer Indexierung der $m^{L_T}$ Trellis-Zustände gemäß $v = 1, ..., m^{L_T}$, abgespeichert werden. Dadurch wird erreicht, dass für die Berechnung der Übergangsmetriken im Rahmen der ACS-Operationen zu einem Zeitschritt lediglich die Zugriffsadresse für den ersten Tabellenspeicher inkrementiert und/oder dekrementiert werden muss.

Die Umspeicherung erfolgt, indem bei jedem Zeitschritt k jedem Trellis-Zustand-indexierten Speicherplatz des dritten Tabellenspeichers diejenige Adresse des zweiten Tabellenspeichers zugeordnet wird, unter welcher der für diesen Trellis-Zustand zum Zeitschritt k zu berücksichtigende Entscheidungsrückkopplungsbeitrag gespeichert ist.

Eine zur Ausführung des erfindungsgemäßen Verfahrens ausgelegte Vorrichtung umfasst demgemäß einen $m^{L_T+1}$ Speicherplätze nutzenden ersten Tabellenspeicher, einen $m^{L-L_T}$ Speicherplätze nutzenden zweiten Tabellenspeicher zur Abspeicherung von Entscheidungsrückkopplungsbeiträgen, und einen $m^{L_T}$ Speicherplätze nutzenden dritten Tabellenspeicher zur Zustands-indexierten Abspeicherung von Entscheidungsrückkopplungsbeiträgen für jeden Zeitschritt sowie einen in Zugriffsverbindung mit den ersten Tabellenspeichern stehenden Prozessor zur Berechnung der Übergangsmetriken bei der Durchführung der ACS-Operationen. Der dritte Tabellenspeicher kann wie bereits erwähnt im Falle einer DF-Entzerrung durch Inkrementieren/Dekrementieren der Speicheradresse ausgelesen werden.

Weitere vorteilhafte Ausgestaltungen der Erfindung sind in den Unteransprüchen angegeben.

Die Erfindung wird nachfolgend anhand von Ausführungsbeispielen unter Bezugnahme auf die Zeichnung beschrieben; in dieser zeigt:

Fig. 1a    eine schematische Darstellung eines Modells des physikalischen Übertragungskanals;

Fig. 1b    den Aufbau eines Filters zur Modellierung des Übertragungskanals;

Fig. 2        eine Darstellung der Trellis-Zustände für m = 2 und $L_T$ = 4;

Fig. 3        eine schematische Darstellung eines Ausschnitts aus einem Trellis-Diagramm für m = 2 und $L_T$ = 2 für einen Übergang vom Zeitschritt k in den Zeitschritt k+1;

Fig. 4        eine schematische Darstellung der Speicherbelegung eines ersten Tabellenspeichers zur Abspeicherung der Trellis-Beiträge für m = 2 und $L_T$ = 4;

Fig. 5        eine schematische Darstellung der möglichen Entscheidungsrückkopplungsbeiträge für den Fall m = 2, $L_T$ = 4 und L = 6 sowie die Speicherbelegung eines zweiten Tabellenspeichers;

Fig. 6        die Zuordnung eines Entscheidungsrückkopplungsbeitrags zu einem Trellis-Zustand eines reduzierten Trellis-Diagramms zum Zeitschritt k sowie die Speicherbelegung eines dritten Tabellenspeichers;

Fig. 7a       ein Blockschaltbild zur Erläuterung des Aufbaus eines herkömmlichen Viterbi-Entzerres; und

Fig. 7b       ein Blockschaltbild zur Erläuterung des Aufbaus eines Viterbi-Entzerrers gemäß der vorliegenden Erfindung.

Zunächst wird kurz auf die Grundlagen der Viterbi-Entzerrung eingegangen. Das Viterbi-Enterrungsverfahren basiert darauf, dass der zeitdiskrete Mehrwege-Übertragungskanal durch das in Fig. 1b näher dargestellte Übertragungsfilter H modelliert wird. Das Filter H umfasst ein Schieberegister bestehend aus L Speicherzellen Z. Vor und hinter jeder Speicherzelle Z befinden sich jeweils Abgriffe (insgesamt L+1 Stück), die zu Multiplizierern führen, welche die Werte der über einen Eingang IN in das Schieberegister eingeschobenen Symbole $s_k$, $s_{k-1}$,...,$s_{k-L}$ mit den entsprechenden Kanalimpulsantworten $h_0$,$h_1$,...,$h_L$ multiplizieren. Eine Ausgabestufe AD des Filters H addiert die Ausgänge der L+1 Multiplizierer auf, es ergibt sich somit ein Ausgangssignal OUT gemäß Gleichung 1.

In diesem Modell wird durch die Speicherinhalte des Schieberegisters der Zustand des Kanals beschrieben. Der Speicherinhalt der eingangsseitig ersten Speicherzelle enthält im Zeitschritt k das Symbol $s_{k-1}$ (welches mit $h_1$ multipliziert wird), die weiteren Speicherzellen Z sind mit den Symbolen $s_{k-2}$, $s_{k-3}$,...,$s_{k-L}$ belegt. Der Zustand des Kanals im Zeitschritt k ist damit eindeutig durch die Angabe der Speicherinhalte, das heißt durch das L-Tupel $(s_{k-L},s_{k-L+1},...,s_{k-1})$, bestimmt.

Ein Schieberegister mit L Speicherzellen kann insgesamt $m^L$ unterschiedliche Belegungen aufweisen, wobei mit m die Anzahl der möglichen Ausprägungen des Symbols, das heißt die Wertigkeit desselben, bezeichnet wird. Allgemein kann daher der Zustand des Kanals durch das L-Tupel

$$(s^{(v)}(1),s^{(v)}(2),...,s^{(v)}(L)) \qquad\qquad (2)$$

definiert werden, wobei $s^{(v)}(n)$ das an der n-ten Stelle des L-Tupels zum Trellis-Zustand mit Index v stehende Symbol bezeichnet (d.h. $s^{(v)}(L)$ ist die Variable für die Belegung der eingangsseitigen Speicherzelle Z des Schieberegisters und $s^{(v)}(1)$ ist die Variable für die Belegung der hintersten Speicherzelle Z des Schieberegisters).

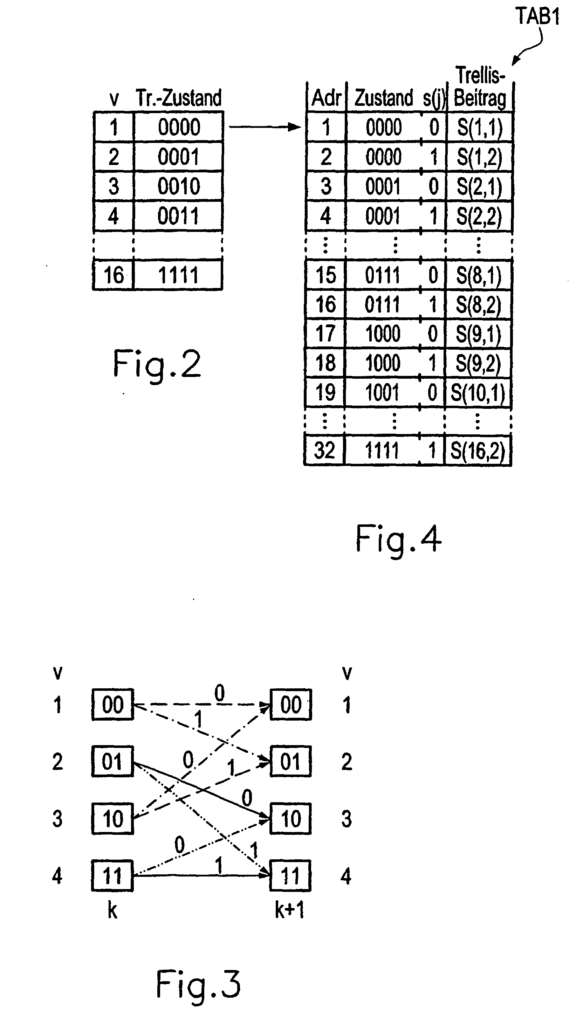

In Fig. 2 sind die 16 Trellis-Zustände (mögliche Schieberegisterbelegungen) für L = 4 bei Zugrundelegung eines binären Symbolalphabets angegeben.

Das dem Schieberegister eingangsseitig zum k-ten Zeitschritt zugeführte Symbol $s_k$ wird im nächsten Zeitschritt k+1 in der eingangsseitigen Speicherzelle Z abgespeichert. Die Taktfrequenz des Schieberegisters ist 1/T, wobei mit T die Symbol- bzw. Zeitschrittdauer bezeichnet ist. Mit jedem Zeitschritt ändert sich also im allgemeinen der Speicherinhalt einer jeden Speicherzelle Z, da die gespeicherten Symbole jeweils nach links in die nächste Speicherzelle Z geschoben werden.

Die sich dabei ergebende Folge von Zuständen bestimmt einen Pfad durch einen über der diskreten Zeit k aufgetragenen regelmäßigen Graphen. Dieser Graph heißt Trellis-Diagramm. Der Viterbi-Algorithmus ermittelt zur Schätzung der gesendeten Symbolfolge $s_k$,$s_{k+1}$,... die Folge der Zustände (Pfad) durch das Trellis-Diagramm.

Fig. 3 zeigt einen Ausschnitt des Trellis-Diagramms für den Fall m = 2 und L = 2. Es existieren lediglich vier Kanalzustände (0,0), (0,1), (1, 0) , (1,1). Jeder der Kanalzustände zum Zeitschritt k+1 kann durch zwei (allgemein m) Übergänge ausgehend von zwei (allgemein m) unterschiedlichen möglichen Vorgänger-Zuständen zum Zeitschritt k erreicht werden. Die möglichen Übergänge sind in Fig. 3 durch Pfeile dargestellt, wobei jeweils das den Übergang bewirkende Übergangssymbol neben dem Pfeil angegeben ist. Im vorhergehenden Rekursionsschritt wurde zu jedem Zustand zum Zeitschritt k bereits ein zu diesem Zustand hinführender Pfad ermittelt. Die Frage ist, welcher dieser zwei (allgemein m) Pfade, die zu den zwei (allgemein m) möglichen Vorgänger-Zuständen zum Zeitschritt k hinführen, derjenige ist, welcher, wenn er zu dem Zielzustand im Zeitschritt k fortgesetzt wird, den kürzesten Pfad zu diesem Zielzustand aufbaut.

Beispielsweise wird der Zielzustand (0,0) zum Zeitschritt k+1 betrachtet. Als mögliche Vorgänger-Zustände kommen die Zustände (0,0) und (1,0) in Frage. Im Rahmen der Viterbi-Entzerrung zum k-ten Zeitschritt muss entschieden.werden, welcher dieser beiden Vorgänger-Zustände der Wahrscheinlichere ist.

Zur Beantwortung dieser Frage wird beim Viterbi-Algorithmus für jeden der Übergänge zwischen einem der möglichen Vorgänger-Zustände und dem betrachteten Zielzustand eine Übergangsmetrik (manchmal auch als Metrikinkrement bezeichnet) $I(v_k, v_{k+1})$ berechnet, und zwar gemäß der Beziehung

$$I(v_k, v_{k+1}) = \left( x_k - \sum_{i=1}^{L} h_i s^{(v_k)}(L + 1 - i) - h_0 s_k \right)^2 \qquad (3)$$

Die Übergangsmetrik ist somit der euklidsche Abstand zwischen dem Abtastwert $x_k$ und einem Wert

$$\sum_{i=1}^{L} h_i s^{(v_k)}(L + 1 - i) + h_0 s_k \ .$$

Letzterer Wert wird auch als rekonstruierter Signalwert der Übergangsmetrik bezeichnet und hängt - wie ersichtlich - von dem betrachteten Vorgänger-Zustand $v_k$ (d.h. der Hypothese für die Belegung des Kanalmodell-Schieberegisters) und dem den betrachteten Übergang in den Zielzustand $v_{k+1}$ bewirkenden Übergangssymbol $s_k$ ab. Das heißt, jede Übergangsmetrik berechnet sich nach der Vorschrift:

Übergangsmetrik = |Abtastwert - rekonstruierter Signalwert|

Für das in Fig. 3 dargestellte Beispiel ergibt sich z.B:

$$I(1_k, 1_{k+1}) = (x_k - h_2{*}0 - h_1{*}0 - h_0{*}0)^2 = x_k^2$$

$$I(3_k, 1_{k+1}) = (x_k - h_2{*}1 - h_1{*}0 - h_0{*}0)^2 = (x_k - h_2)^2$$

$$I(1_k, 2_{k+1}) = (x_k - h_2{*}0 - h_1{*}0 - h_0{*}1)^2 = (x_k - h_0)^2$$

$$I(3_k, 2_{k+1}) = (x_k - h_2{*}1 - h_1{*}0 - h_0{*}1)^2 = (x_k - h_2 - h_0)^2$$

...usw.

Aufgrund der rekursiven Berechnungsweise ist zum Zeitschritt k für jeden der zwei (allgemein: m) möglichen Vorgänger-Zustände mit Index $v_k$ bereits eine minimale Metrik berechnet worden. Diese wird mit $Me(v_k)$ bezeichnet. Auf der Basis dieser bekannten zwei (allgemein m) minimalen Metriken für die möglichen Vorgänger-Zustände und der berechneten zwei (allgemein m) Übergangsmetriken $I(v_k, v_{k+1})$ für die zugehörigen Übergänge wird der Pfad-Entscheidungsprozess für den Zeitschritt k durchgeführt. Er umfasst pro Zielzustand drei Schritte:

- Durch einen Additionsschritt (ADD) werden die mit me bezeichneten m Kandidaten für die minimale Metrik des betrachteten Zielzustands $v_{k+1}$ als Summe jeweils der minimalen Metrik einer der Vorgänger-Zustände und der zugehörigen Übergangsmetrik nach

$$me(v_{k+1}) = Me(v_k)+I(v_k,v_{k+1}) \qquad (4)$$

berechnet.

- Durch einen Vergleichsschritt (COMPARE) wird diejenige der m berechneten Metriken $me(v_{k+1})$ bestimmt, die den kleinsten Wert aufweist. Dies wird die minimale Metrik $Me(v_{k+1})$ des betrachteten Zielzustands.

- Durch einen Auswahlschritt (SELECT) wird derjenige Vorgänger-Zustand der m möglichen Vorgänger-Zustände ausgewählt, der Ausgangspunkt des Übergangs zum Zustand $v_{k+1}$ mit der minimalen Metrik $Me(v_{k+1})$ ist. Damit ist der richtige Vorgänger-Zustand ermittelt. Die Pfade, die zu den übrigen m-1 möglichen Vorgänger-Zuständen führen, brechen hier ab.

Die drei genannten Schritte sind grundlegend für eine Viterbi-Entzerrung. Sie sind, wie bereits erwähnt, als ACS-(ADD-COMPARE-SELCT-)Operationen bekannt.

Anschaulich gesprochen werden in jedem ACS-Schritt zu m Hypothesen (mögliche Vorgänger-Zustände des Kanals zum Zeitschritt k) m mögliche Empfangswerte (die rekonstruierten Signalwerte) unter Berücksichtigung der Übertragungseigenschaften des Kanals (Kanalparameter $h_0,h_1,...,h_L$) berechnet und mit dem tatsächlich gemessenen Empfangswert $x_k$ verglichen. Derjenige rekonstruierte Signalwert, der am besten mit dem gemessenen Empfangssymbol $x_k$ übereinstimmt, trägt im Zeitschritt k am wenigsten zur jeweiligen Pfadsumme (Zustandsmetrik) bei. Ausgewählt wird der "richtige" Vorgängerzustand allerdings nicht allein anhand der kleinsten Übergangsmetrik sondern anhand einer Gesamtbilanz, bei der jeweils die gesamten Pfadsummen (bisherige Pfadsumme + berechnete Übergangsmetrik: letztlich also nichts anderes als die akkumulierten Übergangsmetriken entlang des betrachteten Pfads) miteinander verglichen werden.

Es wird deutlich, dass ACS-Operationen üblicherweise zeitlich "rückwärts" (d.h. von k+1 nach k) durchgeführt werden müssen, weil sie an einen bestimmten Zielzustand zum Zeitschritt k+1 anknüpfen, jedoch Übergänge ausgehend vom Zeitschritt k zu diesem bestimmten Zielzustand bewerten.

Für höherstufige Datensignale erhöht sich der Realisierungsaufwand einer Viterbi-Entzerrung drastisch. Während GSM (Global System for Mobile Communications) ein binäres (d.h. 2-stufiges) Datensignal nutzt, liegt dem neuen EDGE-(Enhanced Data Services for GSM Evolution-)Standard das BPSK-Modulationsverfahren zugrunde, welches ein 8-stufiges Datensignal (m = 8) voraussetzt. Dies bedeutet, dass von jedem Trellis-Zustand 8 Zustands-Übergänge ausgehen und in jedem Trellis-Zustand 8 Zustands-Übergänge enden. Ein Kanal modelliert mit L = 5 würde $8^5$ mögliche Kanalzustände aufweisen, für die für jeden Zeitschritt eine ACS-Operation durchzuführen wäre. Der hierfür benötigte Rechenaufwand ist für praktische Anwendungen zu hoch.

Eine simple Möglichkeit, um den Rechenaufwand in vertretbaren Grenzen zu halten, besteht darin, ein kurzes Kanalgedächtnis (d.h. einen kleinen Wert für L) der Viterbi-Entzerrung zugrunde zu legen. Nachteilig ist jedoch, dass dadurch die Performance des Entzerrers stark beeinträchtigt wird. Besser ist es, die Viterbi-Entzerrung auf der Basis eines reduzierten Trellis-Diagramms nach dem Entscheidungs-Rückkoppelungsverfahren (DF) durchzuführen. Für die Berechnung der Übergangsmetriken beziehungsweise der rekonstruierten Signalwerte wird weiterhin ein "langes" Kanalgedächtnis mit sämtlichen L+1 Kanalimpulsantworten verwendet, die Pfadermittlung erfolgt jedoch unter Zugrundelegung eines reduzierten Trellis-Diagramms mit lediglich $m^{L_T}$ Zuständen, wobei $L > L_T$ ist. Das Kanalmodell umfasst also weiterhin ein Schieberegister mit L Speicherzellen, wobei jedoch lediglich die ersten $L_T$ Speicherzellen zur Definition der Kanalzustände verwendet werden.

Die Gleichung 2 ist dann durch den folgenden Ausdruck zu ersetzen:

$$(s^{(v)}(L - L_T + 1), s^{(v)}(L - L_T + 2),...,s^{(v)}(L)) \qquad (5)$$

Für die rekonstruierten Signalwerte ergibt sich:

$$\sum_{i=1}^{L} h_i s^{(v_k)}(L + 1 - i) + h_0 s_k$$

$$= \sum_{i=1}^{L_T} h_i s^{(v_k)}(L + 1 - i) + h_0 s_k + \sum_{i=L_T+1}^{L} h_i s^{(v_k)}(L + 1 - i)$$

$$= \sum_{i=1}^{L_T} h_i s^{(v_k)}(L + 1 - i) + h_0 s_k + \left( h_{L_T+1} s^{(v_k)}(L - L_T) + \ldots + h_L s^{(v_k)}(1) \right)$$

$$(6)$$

Im folgenden wird die erfindungsgemäße Vorgehensweise zur Durchführung einer Viterbi-Entzerrung beschrieben. Diese besteht im wesentlichen darin, die rekonstruierten Signalwerte soweit wie möglich nach einer Kanalschätzung im Voraus zu berechnen und geeignet abzuspeichern, so dass für die Berechnung der Übergangsmetriken in den nachfolgenden Zeitschritten die rekonstruierten Signalwerte durch einfaches Nachschlagen in einem Tabellenspeicher (beziehungsweise im DF-Fall in zwei Tabellenspeichern) bezogen werden können.

Die in Gleichung 5 angegebene Schreibweise eines Zustands weist den Nachteil auf, dass sie abhängig von L ist. Anstelle dieser Schreibweise wird daher die von L unabhängige Zustandsdefinition

$$(s^{(v)}(1), s^{(v)}(2), \ldots, s^{(v)}(L_T)) \tag{7}$$

verwenden, welche im Falle eines nicht-reduzierten Trellis-Diagramms identisch mit dem in Gleichung 5 gegebenen Ausdruck ist und im Falle eines reduzierten Trellis-Diagramms durch eine Index-Umnumerierung (Subtraktion von $L-L_T$) aus diesem hervorgeht. Bei Gleichung 7 werden genauso wie bei Gleichung 5 nur die $L_T$ eingangsseitigen Speicherzellen des Schieberegisters zur Definition eines Trellis-Zustands berücksichtigt, der Unterschied besteht lediglich darin, dass eine Erhöhung der Anzahl L+1 gemessener Kanalparameter gemäß Gleichung 7 keinen Einfluß auf die Schreibweise der Trellis-Zustände hat.

Es werden nach einer Kanalschätzung zunächst die $m^{L_T+1}$ Ausdrücke

$$S(v, j) = \sum_{i=1}^{L_T} h_i s^{(v)}(L_T + 1 - i) + h_0 s(j) \qquad j = 1, \ldots, m$$

$$v = 1, \ldots, m^{L_T} \tag{8}$$

berechnet und in einem ersten Tabellenspeicher TAB1 mit $m^{L_T+1}$ Speicherplätzen abgelegt. Dabei sind mit s(j), j = 1,..., m, die m Symbole des Symbolalphabets bezeichnet und mit $s^{(v)}(n)$ ist das an der n-ten Stelle des $L_T$-Tupels $(s^{(v)}(1),$ $s^{(v)}(2),\ldots,s^{(v)}(L_T))$ mit Index v, v = 1,..., $m^{L_T}$, stehende Symbol bezeichnet. Man erkennt, dass

$$S(v, j) = \sum_{i=1}^{L_T} h_i s^{(v)}(L + 1 - i) + h_0 s(j)$$

gilt, sofern die in Gleichung 5 angegebene Schreibweise eines reduzierten Trellis-Zustands zugrunde gelegt wird.

Im folgenden werden die beiden Fälle eines nicht reduzierten Trellis-Diagramms und eines reduzierten Trellis-Diagramms betrachtet:

1. Im Fall eines nicht reduzierten Trellis-Diagramms ($L = L_T$) weist ein erster Tabellenspeicher $m^{L+1}$ Speicherplätze auf, und in jedem Speicherplatz ist ein Wert

$$S(v, j) = \sum_{i=1}^{L} h_i s^{(v)}(L + 1 - i) + h_0 s(j) \qquad j = 1, \ldots, m$$

$$v = 1, \ldots, m^L$$

gespeichert. In diesem Fall ist der vorausberechnete Trellis-Beitrag $S(v,j)$ identisch mit einem rekonstruierten Signalwert einer Übergangsmetrik, wie aus einem Vergleich mit Gleichung 3 ersichtlich ist, dh:

Rekonstruierter Signalwert = Trellis-Beitrag

Fig. 4 zeigt für das Beispiel $m = 2$ und $L = 4$ die Belegung des ersten Tabellenspeichers TAB1 mit den 32 Trellis-Beiträgen (rechte Spalte). Die linke Spalte gibt die Speicheradresse an, welche nach der Gleichung Adr = $j+(v-1)*m$ gewählt sein kann. Die mittlere Spalte gibt den zugehörigen Trellis-Zustand $(s(1),s(2),s(3),s(4))$ sowie das der Berechnung des Trellis-Beitrags zugrunde liegende Symbol $s(j)$ an. Die mittlere Spalte ist lediglich zu Erläuterungszwecken der Darstellung in Fig. 4 hinzugefügt und stellt keine Speichereinträge dar.

Die Trellis-Beiträge $S(v,j)$ werden sofort nach einer jeden Kanalschätzung ermittelt und in dem ersten Tabellenspeicher TAB1 abgespeichert. Damit sind sämtliche rekonstruierten Signalwerte bekannt und fortan verfügbar. Eine Aktualisierung des ersten Tabellenspeichers TAB1 findet nur nach einer neuen Kanalschätzung statt, d.h. die Speicherinhalte bleiben über viele Zeitschritte unverändert.

Bei der Berechnung der Übergangsmetriken im Rahmen der Abarbeitung der ACS-Operationen wird nach Gleichung 3 der benötigte rekonstruierte Signalwert einfach als Trellis-Beitrag $S(v,j)$ zu dem betrachteten (Vorgänger-)Zustand $v$ und dem Übergangssymbol $s(j)$ für den betrachteten Übergang aus dem ersten Tabellenspeicher TAB1 ausgelesen. Die Berechnung der Übergangsmetriken wird wie im Stand der Technik üblich Butterfly für Butterfly durchgeführt. Vorzugsweise erfolgt sie in Vorwärtsrichtung ausgehend von einem bestimmten Vorgänger-Zustand $v_k$ zum Zeitschritt $k$. Die für die $m$ Übergangsmetriken zu diesem Vorgänger-Zustand benötigten rekonstruierten Signalwerte können durch $m$-faches Inkrementieren der niedrigsten auf diesen Zustand weisenden Speicheradresse ausgelesen werden. Der Vorteil besteht darin, dass bei einer solchen Adressenbelegung eine einfache Zählung zur "Berechnung" der Zugriffsadresse ausreichend ist.

2. Im DF-Fall ($L > L_T$) sind für die Berechnung der rekonstruierten Signalwerte der Übergangsmetriken weitere Kanalparameter zu berücksichtigen. Erfindungsgemäß werden nach einer Kanalschätzung (jedoch vor der Abarbeitung der ACS-Operationen) ferner $m^{df}$ Entscheidungsrückkopplungsbeiträge gemäß der Gleichung

$$DF(j_1,\ldots,j_{df}) = h_{L_T+1} s(j_1) + \ldots + h_L s(j_{df}) \tag{9}$$

berechnet, wobei die Zustands-Indizes $j_1,\ldots,j_{df}$ jeweils die Werte $1,\ldots,m$ annehmen können. Es wird die Abkürzung $L-L_T = df$ verwendet.

Die $m^{df}$ Entscheidungsrückkopplungsbeiträge werden in einem zweiten Tabellenspeicher TAB2 mit $m^{df}$ Speicherplätzen abgelegt. Der zweite Tabellenspeicher TAB2 muß genauso wie der erste Tabellenspeicher TAB1 nur bei einer Neuschätzung der Kanalparameter aktualisiert werden.

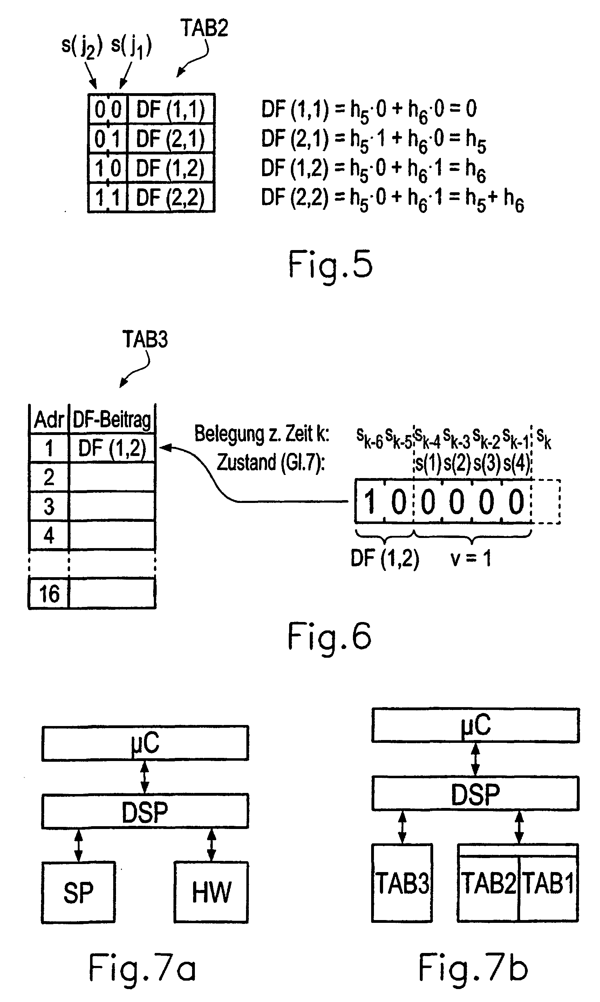

Fig. 5 zeigt die Speicherbelegung des zweiten Tabellenspeichers TAB2 für den Fall $m = 2$, $L = 6$ und $L_T = 4$. In der linken Spalte sind die Werte für $s(j_1)$ und $s(j_2)$ angegeben. Die rechte Spalte enthält die vier Entscheidungsrückkopplungsbeiträge $DF(1,1) = 0$, $DF(2,1) = h_5$, $DF(1,2) = h_6$ und $DF(2,2) = h_5+h_6$.

Die Gleichung 3 kann im DF-Fall folgendermaßen geschrieben werden:

$$I(v_k, v_{k+1}) = \left( x_k - \left( \sum_{i=L_T+1}^{L} h_i s^{(v_k)}(L + 1 - i) + \sum_{i=1}^{L_T} h_i s^{(v_k)}(L + 1 - i) + h_0 s_k \right) \right)^2$$

$$= \left( x_k - \left( DF(j_1^{(v_k)}, \ldots, j_{df}^{(v_k)}) + S(v_k, j) \right) \right)^2 \tag{10}$$

Ein bei der Berechnung einer Übergangsmetrik benötigter rekonstruierter Signalwert setzt sich somit aus einem Trellis-Beitrag $S(v_k,j)$ gemäß Gleichung 8 (unter Verwendung der in Gleichung 7 angegebenen Zustandsdefinition) und einem DF-Beitrag $DF(j_1^{(v_k)},...,j_{df}^{(v_k)})$ zusammen:

$$\text{Rekonstruierter Signalwert = Trellis-Beitrag + DF-Beitrag}$$

Er kann somit durch Addition eines aus dem ersten Tabellenspeicher TAB1 ausgelesenen Wertes mit einem aus dem zweiten Tabellenspeicher TAB2 ausgelesenen Wert berechnet werden. Die Schreibweise $j_1^{(v_k)},...,j_{df}^{(v_k)}$ soll andeuten, dass die Indizes $j_1,...,j_{df}$ von dem betrachteten Zustand $v_k$ abhängen.

Fig. 6 erläutert die hierfür erforderliche Zuordnung zwischen einem Trellis-Zustand $v_k$ zum Zeitschritt k und dem gemäß Gleichung 9 vorab berechneten und in TAB2 abgelegten Entscheidungsrückkopplungsbeitrag $DF(j_1,...,j_{df})$ am Beispiel L = 6, $L_T$ = 4 und m = 2.

Für jeden Trellis-Zustand, der durch die (angenommenen) zuletzt in den Kanal eingespeisten Symbole $s_{k-1}$, $s_{k-2}$, $s_{k-3}$ und $s_{k-4}$ gegeben ist, liegt Zusatzinformation über die beiden früheren Symbole $s_{k-5}$ und $s_{k-6}$ vor. Im Trellis-Diagramm entsprechen die beiden früheren Symbole $s_{k-5}$ und $s_{k-6}$ einer Zusatz-Informationen zu dem durch die Symbole $s_{k-1}$, $s_{k-2}$, $s_{k-3}$ und $s_{k-4}$ bestimmten Trellis-Zustand, welche durch den zu diesem Zustand hinführenden Pfad gegeben ist. In dem in Fig. 6 dargestellten Beispiel lautet die Zusatz-Information $s_{k-6}$ = 1 und $s_{k-5}$ = 0 zum Trellis-Zustand v = 1, gegeben durch das 4-Tupel (s(1),s(2),s(3),s(4)) = (0,0,0,0) gemäß der in Gleichung 7 angegebenen Schreibweise. Die Zusatz-Information weist gemäß dem zweiten Tabellenspeicher TAB2 auf den Entscheidungsrückkoppelungsbeitrag DF(1,2). In analoger Weise ist entsprechend den jeweiligen auf Empfängerseite ermittelten Pfadverläufen im Trellis-Diagramm jedem der 16 Zustände einer der vier Entscheidungsrückkoppelungsbeiträge im zweiten Tabellenspeicher TAB2 (dargestellt in Fig. 5) zugeordnet.

Mit anderen Worten ist für jeden Vorgänger-Zustand $v_k$ anhand der pfadbezogenen Zusatz-Information $j_1^{(v_k)},...,j_{df}^{(v_k)}$ der jeweilige vorab berechnete Entscheidungsrückkopplungsbeitrag $DF(j_1,...,j_{df})$ mit $j_1,...,j_{df} = j_1^{(v_k)},...,j_{df}^{(vk)}$ zu bestimmen.

Erfindungsgemäß kann nun vorgesehen sein, dass vor jeder Abarbeitung der ACS-Operationen zu einem Zeitschritt k ein dritter Tabellenspeicher TAB3 mit $m^{L-T}$ Speicherplätzen (hier 16 Stück) mit dem jedem Trellis-Zustand $v_k$ in diesem Zeitschritt zugeordneten Entscheidungsrückkopplungsbeitrag beschrieben wird. Der dritte Tabellenspeicher TAB3 enthält also die DF-Beiträge aus dem zweiten Tabellenspeicher TAB2, jedoch indexiert nach Trellis-Zuständen. Der dritte Tabellenspeicher TAB3 muss im Gegensatz zu den ersten und zweiten Tabellenspeichern TAB1, TAB2 in jedem Zeitschritt k aktualisiert werden.

Die Speicherbelegung des dritten Tabellenspeichers TAB3 ist in der im linken Teil von Fig. 6 dargestellten Tabelle in der rechten Spalte angegeben. Die linke Spalte betrifft die Speicheradresse, welche beispielsweise nach der Beziehung Adr = v, d.h. entsprechend dem Zustandsindex v, gewählt werden kann.

Bei dem hier gezeigten Beispiel ist dem Zustand (0,0,0,0) mit Index v = 1 im Zeitschritt k der Entscheidungsrückkopplungsbeitrag DF(1,2) zugeordnet. DF(1,2) wird somit im k-ten Zeitschritt unter der Speicheradresse 1 (= $v_k$) im dritten Tabellenspeicher TAB3 abgespeichert. Entsprechend wird der gesamte dritte Tabellenspeicher TAB3 gefüllt.

Für die Berechnung der m rekonstruierten Signalwerte im Rahmen der ACS-Operationen zum Zeitschritt k bezüglich eines bestimmten Vorgänger-Zustands sind m Zugriffe auf den ersten Tabellenspeicher TAB1 (unter Inkrementierung der Zugriffsadresse) und ein Zugriff auf den dritten Tabellenspeicher TAB3 erforderlich. Bei dem hier dargestellten Beispiel wird für die Berechnung der Übergangsmetriken ausgehend von dem Trellis-(Vorgänger-)Zustand v = 1 auf die beiden ersten Speicheradressen Adr = 1 und 2 des ersten Tabellenspeichers TAB1 und auf die erste Speicheradresse Adr = 1 des dritten Tabellenspeichers TAB3 zugegriffen. Für die Berechnung der Übergangsmetriken ausgehend von dem (Vorgänger-)Zustand mit Index v = 2 wird auf die Adressen Adr = 3 und 4 des ersten Tabellenspeichers TAB1 und auf die Adresse Adr = 2 des dritten Tabellenspeichers TAB3 zugegriffen, und so weiter. Für m = 8 (d.h. im Fall der 8PSK-Modulation) werden 8 Speicherzugriffe auf den ersten Tabellenspeicher TAB1 und ein Zugriff auf den dritten Tabellenspeicher TAB3 für die Berechnung der Übergangsmetriken zu einem Vorgänger-Zustand benötigt.

Für die Berechnung der Übergangsmetriken kommt im DF-Fall also der Zugriff auf den zweiten oder dritten Tabellenspeicher TAB2, TAB3 hinzu. Beiden Ausführungsvarianten (mit und ohne DF) ist gemeinsam, dass der (allein) durch den Trellis-Zustand definierte Trellis-Beitrag $S(v,j)$ stets vollständig vorausberechnet im ersten Tabellenspeicher TAB1 verfügbar ist.

Durch die Erfindung kann eine Abarbeitung des Viterbi-Algorithmus allein in Software realisiert werden. Fig. 7a zeigt den Aufbau eines im Bereich des Mobilfunks eingesetzten herkömmlichen Viterbi-Entzerrers. Der Entzerrer umfasst einen Mikrocontroller µC und einen digitalen Signalprozessor DSP. Der DSP steht über geeignete Schnittstellen mit einer Hardware-Schaltung HW und einem Speicher SP in Verbindung. Die Hardware-Schaltung HW implementiert z.B. die Rechenschritte der ACS-Operation in Hardware und wird von dem DSP geeignet programmiert.

Gemäß der Erfindung wird das in Fig. 7b dargestellte Entzerrerkonzept realisierbar. Es besteht ebenfalls aus einem Mikrocontroller µC und einem DSP. Eine Hardware-Schaltung entsprechend HW ist jedoch nicht vorhanden. Stattdessen greift der DSP in der bereits beschriebenen Weise bei der Berechnung der Übergangsmetriken auf den ersten Tabellenspeicher TAB1 und gegebenenfalls auf den zweiten Tabellenspeicher TAB2 und/oder den dritten Tabellenspeicher TAB3 zu. Sämtliche Berechnungen, insbesondere die ACS-Operationen, werden ausschließlich im DSP, d.h. auf Software-Basis durch Abarbeitung eines entsprechenden Programms, durchgeführt. Die in Fig. 7b dargestellte Trennung des dritten Tabellenspeichers TAB3 von den ersten und zweiten Tabellenspeichern TAB1, TAB2 soll allein die unterschiedliche Aktualisierungsfrequenz dieser Speicher (einmal pro Zeitschritt beziehungsweise einmal pro Kanalschätzung) andeuten.

**Patentansprüche**

1. Verfahren zum Entzerren eines über einen Kanal übertragenen Datensignals, bei welchem gemäß dem Viterbi-Algorithmus Übergangsmetriken zwischen Trellis-Zuständen als Abstand zwischen einem auf Empfängerseite gemessenen Signalwert und einem für den Zustandsübergang und das Kanalübertragungsverhalten charakteristischen rekonstruierten Signalwert bestimmt werden, mit den Schritten:

   - Schätzen von L+1 Kanalparametern $h_0, h_1,...,h_L$ des Kanals, wobei L eine ganze Zahl größer Null ist;
   - auf der Basis von $L_T+1$ geschätzten Kanalparametern $h_0, h_1,...,h_{L_T}$ Berechnen eines Trellis-Beitrags (s(v,j); TAB1) zu jedem der $m^{L_T+1}$ möglichen rekonstruierten Signalwerte, wobei $L_T$ die Anzahl der einen Trellis-Zustand definierenden Symbole ist und m deren Wertigkeit angibt, und wobei $L-L_T = df \geq 1$ gilt;
   - Berechnen von $m^{df}$ Entscheidungsrückkopplungsbeiträgen (DF($j_1,...,j_{df}$); TAB2) basierend auf den df Kanalparametern $h_{L_T+1},...,h_L$;
   - Abspeichern der Trellis-Beiträge (s(v,j); TAB1) in einem ersten Tabellenspeicher (TAB1);
   - Abspeichern der Entscheidungsrückkopplungsbeiträge (DF($j_1,...,j_{df}$); TAB2) in einem zweiten Tabellenspeicher (TAB2);
   - vor der Durchführung der ACS-Operationen für einen bestimmten Zeitschritt (k) Umspeichern der Entscheidungsrückkopplungsbeiträge (DF($j_1,...,j_{df}$); TAB2) in einen dritten Tabellenspeicher (TAB3) mit Zustands-indexierter Adresse;
   - Durchführen von ACS-Operationen über mehrere Zeitschritte, wobei die Umspeicherung vom zweiten in den dritten Tabellenspeicher in jedem folgenden Zeitschritt (k+1,k+2,...) erneut durchgeführt wird, und wobei jeder für die Berechnung einer Übergangsmetrik benötigte rekonstruierte Signalwert durch einen Zugriff auf den ersten Tabellenspeicher (TAB1) und den dritten Tabellenspeicher (TAB2; TAB3) ermittelt wird.

2. Verfahren nach Anspruch 1,
   **dadurch gekennzeichnet,**

   - **dass** ein Trellis-Beitrag nach

$$S(v, j) = \sum_{i=1}^{L_T} h_i s^{(v)}(L_T + 1 - i) + h_0 s(j)$$

   berechnet wird, wobei m die Wertigkeit der dem Datensignal zugrundeliegenden_Symbole, bezeichnet, s(j), j = 1,...,m, diese m Symbole bezeichnet, und das $L_T$-Tupel ($s^{(v)}(1), s^{(v)}(2),...,s^{(v)}(L_T)$) einen Trellis-Zustand mit Index v, v = 1,...,$m^{L_T}$, angibt, wobei $s^{(v)}(n)$, n = 1,...,$L_T$, das an der n-ten Stelle des $L_T$-Tupels stehende Symbol bezeichnet.

3. Verfahren nach Anspruch 1 oder 2
   **dadurch gekennzeichnet,**

- **dass** jeder Trellis-Beitrag (S(v,j); TAB1) durch einen einzigen Lesezugriff auf den ersten Tabellenspeicher (TAB1) ermittelt wird.

4. Verfahren nach einem der Ansprüche 1 bis 3,
   **dadurch gekennzeichnet,**

   - **dass** die Trellis-Beiträge (S(v,j); TAB1) im ersten Tabellenspeicher (TAB1) in Bezug auf einen Zustandsindex v unter fortlaufenden Speicheradressen, insbesondere den Adressen $Adr = j+(v-1)*m$ bei einer Indexierung der $m^{L_T}$ Trellis-Zustände gemäß $v = 1,...,m^{L_T}$, abgespeichert werden.

5. Verfahren nach Anspruch 4,
   **dadurch gekennzeichnet,**

   - **dass** zur Ermittlung der $m^{L_T+1}$ Trellis-Beiträge, die für die ACS-Operationen zu einem Zeitschritt benötigt werden, für den Zugriff auf den ersten Tabellenspeicher (TAB1) die Adresse desselben inkrementiert oder dekrementiert wird.

6. Verfahren nach einem der vorhergehenden Ansprüche,
   **dadurch gekennzeichnet,**

   - **dass** die $m^{df}$ Entscheidungsrückkopplungsbeiträge gemäß $DF(j_1,...,j_{df}) = h_{L_T+1}s(j_1) + ... + h_L s(j_{df})$ berechnet werden, wobei die Indizes $j_1,...,j_{df}$ jeweils die Werte $1,...,m$ annehmen können und $s(\cdot)$ das durch den jeweiligen Index $j_1,...,j_{df}$ bestimmte Symbol ist.

7. Verfahren nach einem der vorhergehenden Ansprüche,
   **dadurch gekennzeichnet,**

   - **dass** bei einer Zustandsindexierung gemäß $v = 1,...,m^{L_T}$ der für den Trellis-Zustand mit Index v zum Zeitschritt k zu berücksichtigende Entscheidungsrückkopplungsbeitrag (DF($j_1,...,j_{df}$); TAB2) im dritten Tabellenspeicher (TAB3) unter der Adresse $Adr = v$ abgespeichert wird.

8. Verfahren nach einem der vorhergehenden Ansprüche,
   **dadurch gekennzeichnet,**

   - **dass** bezüglich eines Zeitschrittes zur Ermittlung der $m^{L_T+1}$ rekonstruierten Signalwerte für jeden Trellis-Zustand m Lesezugriffe auf den ersten Tabellenspeicher (TAB1) und ein Lesezugriff auf den dritten (TAB3) Tabellenspeicher durchgeführt werden, und jeder rekonstruierte Signalwert durch Addieren eines aus dem ersten Tabellenspeicher (TAB1) ausgelesenen Trellis-Beitrags (S(v,j); TAB1) und eines aus dem dritten Tabellenspeicher ausgelesenen Entscheidungsrückkopplungsbeitrags (DF($j_1,...,j_{df}$); TAB2) gewonnen wird.

9. Verfahren nach Anspruch 8,
   **dadurch gekennzeichnet,**

   - **dass** Lesezugriffe auf den ersten (TAB1) und dritten (TAB3) Tabellenspeicher im Rahmen einer Abarbeitung der ACS-Operationen zu einem Zeitschritt unter Inkrementierung und/oder Dekrementierung der jeweiligen Zugriffsadressen durchgeführt werden.

10. Vorrichtung, ausgelegt zum Entzerren eines über einen Kanal übertragenen Datensignals nach einem der vorhergehenden Ansprüche, mit

    - einem $m^{L_T+1}$ Speicherplätze nutzenden ersten Tabellenspeicher (TAB1),
    - einem $m^{L-L_T}$ Speicherplätze nutzenden zweiten Tabellenspeicher (TAB2) zur Abspeicherung von Entscheidungsrückkopplungsbeiträgen,
    - einem $m^{L_T}$ Speicherplätze nutzenden dritten Tabellenspeicher (TAB3) zur Zustands-indexierten Abspeicherung der Entscheidungsrückkopplungsbeiträge für jeden Zeitschritt,
    - einem in Zugriffsverbindung mit den Tabellerrspeichern stehenden Prozessor (DSP) zur Berechnung der Übergangsmetriken bei der Durchführung der ACS-Operationen.

wobei L eine ganze Zahl größer Null ist, wobei $L_T$ die Anzahl der einen Trellis-Zustand definierenden Symbole ist und m deren Wertigkeit angibt.

**11.** Vorrichtung nach Anspruch 10,
   **dadurch gekennzeichnet,**

- **dass** der Prozessor (DSP) ausgelegt ist, die Berechnung der ACS-Operationen ohne Hardware-Unterstützung allein in Software durchzuführen.

**Claims**

**1.** Method for equalization of a data signal which is transmitted via a channel and in which, on the basis of the Viterbi algorithm, transition metrics are determined between trellis states as the distance between a signal value measured at the receiver end and a reconstructed signal value which is characteristic of the state transition and of the channel transmission response, having the following steps:

- estimation of L+1 channel parameters $h_0, h_1, ..., h_L$ of the channel, where L is an integer greater than zero;
- on the basis of $L_T + 1$ estimated channel parameters $h_0, h_1, ... , h_{L_T}$, calculation of a trellis contribution (S(v,j); TAB1) for each of the $m^{L_T+1}$ possible reconstructed signal values, with $L_T$ being the number of symbols which define a trellis state and m indicates their value, and where $L-L_T = df \geq 1$;
- calculation of $m^{df}$ decision feedback contributions (DF($j_1,...,j_{df}$); TAB2) based on the df channel parameters $h_{L_T+1},...,h_L$;
- storage of the trellis contributions (S(v,j); TAB1) in a first table memory (TAB1);
- storage of the decision feedback contributions (DF($j_1,...,j_{df}$); TAB2) in a second table memory (TAB2);
- before carrying out the ACS operations for a specific time step (k), re-storage of the decision feedback contributions (DF($j_1,...,j_{df}$); TAB2) in a third table memory (TAB3) with a state-indexed address;
- carrying out ACS operations over two or more time steps, with the re-storage from the second to the third table memory being carried out once again in each subsequent time step (k+1,k+2,...), and with each reconstruction signal value which is required for the calculation of a transition metric being determined by access to the first table memory (TAB1) and to the third table memory (TAB2; TAB3).

**2.** Method according to Claim 1,
   **characterized**

- **in that** a trellis contribution is calculated using

$$S(v, j) = \sum_{i=1}^{L_T} h_i s^{(v)}(L_T + 1 - i) + h_0 s(j),$$

where m denotes the value of the symbols on which the data signal is based, s(j), j = 1,...,m denotes these m symbols and the $L_T$ tuple ($s^{(v)}(1), s^{(v)}(2), ... , s^{(v)}(L_T)$) indicates a trellis state with the index v, v = 1,...,$m^{L_T}$, while $s^{(v)}(n)$, n = 1,...,$L_T$ denotes the symbol which is in the n-th place in the $L_T$ tuple.

**3.** Method according to Claim 1 or 2,
   **characterized**

- **in that** each trellis contribution (S(v,j); TAB1) is determined by a single read access to the first table memory (TAB1).

**4.** Method according to one of Claims 1 to 3,
   **characterized**

- **in that** the trellis contributions (S(v,j); TAB1) are stored in the first table memory (TAB1) with respect to a state index v at sequential memory addresses, in particular at the addresses Adr = j+(v-1)*m for indexing of the $m^{L_T}$ trellis states where v = 1,..., $m^{L_T}$.

**5.** Method according to Claim 4,
**characterized**

- **in that**, in order to determine the $m^{L_T+1}$ trellis contributions which are required for the ACS operations for one time step, the address thereof is incremented or decremented for access to the first table memory (TAB1).

**6.** Method according to one of the preceding claims,
**characterized**

- **in that** the $m^{df}$ decision feedback contributions are calculated using $DF(j_1,..., j_{df}) = h_{L_T+1}s(j_1) + ... + h_L s(j_{df})$, where the indices $j_1,...,j_{df}$ may each assume the values $1,...,m$, and $s(\cdot)$ is the symbol which is determined by the respective index $j_1,...,j_{df}$.

**7.** Method according to one of the preceding claims,
**characterized**

- **in that**, for a state index on the basis of $v = 1,...,m^{L_T}$, the decision feedback contribution $(DF(j_1,...,j_{df}); TAB2)$ to be taken into account for the trellis state with the index v for the time step k is stored at the address Adr = v in the third table memory (TAB3).

**8.** Method according to one of the preceding claims,
**characterized**

- **in that**, with respect to one time step for determination of the $m^{L_T+1}$ reconstructed signal values for each trellis state, m read accesses are made to the first table memory (TAB1) and one read access is made to the third (TAB3) table memory, and each reconstructed signal value is obtained by addition of a trellis contribution $(S(v,j); TAB1)$, which is read from the first table memory (TAB1), and a decision feedback contribution $(DF(j_1,..., j_{df}); TAB2)$ which is read from the third table memory.

**9.** Method according to Claim 8,
**characterized**

- **in that** read accesses to the first (TAB1) and third (TAB3) table memories are made in the course of processing the ACS operations for one time step, with the respective access addresses being incremented and/or decremented.

**10.** Apparatus, designed for equalization of a data signal which is transmitted via one channel, according to one of the preceding claims, having

- a first table memory (TAB1) which uses $m^{L_T+1}$ memory locations,
- a second table memory (TAB2), which uses $m^{L-L_T}$ memory locations, for storage of decision feedback contributions,
- a third table memory (TAB3), which uses $m^{L_T}$ memory locations, for state-indexed storage of the decision feedback contributions for each time step,
- a processor (DSP), which has an access to the table memories, for calculation of the transition metrics for carrying out the ACS operations; with L being an integer greater than zero, $L_T$ being the number of symbols which define a trellis state and m indicating their value.

**11.** Apparatus according to claim 10,
**characterized**

- **in that** the processor (DSP) is designed to calculate the ACS operations solely in software, without hardware assistance.

**Revendications**

**1.** Procédé pour égaliser un signal de données, transmis par l'intermédiaire d'un canal, dans lequel sont définies, conformément à l'algorithme de Viterbi, des métriques de transition entre des états de treillis, en tant qu'intervalle entre une valeur de signal, mesurée côté récepteur et une valeur de signal reconstruite, caractéristique, pour la transition d'état et le comportement de transmission du canal, ayant les étapes consistant à :

- estimer $L + 1$ paramètres de canal $h_0, h_1, ..., h_L$ du canal, $L$ étant un nombre entier supérieur à zéro ;
- calculer, sur la base de paramètres de canal estimés $L_T + 1$ $h_0, h_1, ..., h_{L_T}$, une contribution de treillis ($S(v, j)$ ; TAB1) à chacune des valeurs de signaux reconstruites possibles $m^{L_T +1}$, $L_T$ étant le nombre des symboles, qui définissent un état de treillis et $m$ indiquant leur valence et l'équation $L - L_T = df \geq 1$ étant valable ;
- calculer les contributions des réactions aux décisions $m^{df}$ (DF ($j_1, ..., j_{dF}$) ; TAB2), sur la base des paramètres de canal df $h_{L_T +1,...,} h_L$ ;
- enregistrer les contributions de treillis $m^{df}$ ($S(v, j)$ ; TAB1) dans une première mémoire sous forme de table (TAB1) ;
- enregistrer les contributions des réactions aux décisions (DF ($j_1, ..., j_{dF}$) ; TAB2) dans une deuxième mémoire sous forme de table (TAB2) ;
- réenregistrer, avant d'effectuer les opérations ACS pour un pas dans le temps (k) déterminé, les contributions des réactions aux décisions (DF ($j_1, ..., j_{dF}$) ; TAB2) dans une troisième mémoire sous forme de table (TAB3), avec adresse indexée par état ;
- effectuer des opérations ACS sur plusieurs pas dans le temps, le réenregistrement de la deuxième dans la troisième mémoire sous forme de table étant effectué à nouveau dans chaque pas dans le temps (k + 1, k + 2, ...) subséquent et chaque valeur de signal reconstruite, nécessaire pour le calcul d'une métrique de transition, étant déterminée par le biais d'un accès à la première mémoire sous forme de table (TAB1) et à la troisième mémoire sous forme de table (TAB2 ; TAB3).

2. Procédé selon la revendication 1, **caractérisé en ce qu'**une contribution de treillis est calculée selon l'équation

$$S(v, j) = \sum_{i=i}^{L_T} h_i s^{(v)}(L_T + 1 - i) + h_o s(j),$$

$m$ désignant la valence des symboles, qui sont à la base du signal de données, $s(j)$, $j = 1, ..., m$ désignant ces symboles $m$ et le modèle relationnel $L_T$ ($s^{(v)}(1), s^{(v)}(2), ..., s^{(v)}(L_T)$) indiquant un état de treillis avec indice $v$, $v = 1, ..., m^{L_T}$, $s^{(v)}(n)$, $n = 1, ..., L_T$ désignant le symbole, situé à l'emplacement nième du modèle $L_T$.

3. Procédé selon la revendication 1 ou 2, **caractérisé en ce que**

- chaque contribution de treillis ($s(v, j)$ ; TAB1) est déterminée par le biais d'un accès lecteur unique à la première mémoire sous forme de table (TAB1).

4. Procédé selon l'une des revendications 1 ou 3, **caractérisé en ce que**

- les contributions de treillis ($s(v, j)$ ; TAB1) sont enregistrées dans la première mémoire sous forme de table (TAB1) par rapport à un indice d'état $v$ à des adresses mémoires consécutives, en particulier aux adresses $Adr = j + (v - 1)*m$, dans le cas d'une indexation des états de treillis $m^{L_T}$ conformément à $v = 1, ..., m^{L_T}$.

5. Procédé selon la revendication 4, **caractérisé en ce que**

- pour déterminer les contributions de treillis $m^{L_T + 1}$, qui seront nécessaires pour les opérations ACS à un pas dans le temps donné, l'adresse de celle-ci sera incrémentée ou décrémentée pour l'accès à la première mémoire sous forme de table (TAB1).

6. Procédé selon l'une des revendications précédentes, **caractérisé en ce que**

- les contributions des réactions aux décisions $m^{df}$ sont calculées conformément à la formule $DF(j_1, ..., j_{df}) = h_{L_T + 1} s(j_1) + ... + h_L s(j_{df})$, les indices $j_1, ..., j_{df}$ pouvant supposer respectivement les valeurs $1, ..., m$ et $s(.)$ étant le symbole, défini par le biais de l'indice respectif $j_1, ..., j_{df}$.

7. Procédé selon l'une des revendications précédentes, **caractérisé en ce que**

- dans le cas d'une indexation d'état, conformément à v = 1, ..., $m^{L_T}$, la contribution des réactions aux décisions (DF ($j_1$, ..., $j_{dF}$) ; TAB2), à prendre en compte pour l'état de treillis avec l'indice v au pas dans le temps k, est enregistrée dans la troisième mémoire sous forme de table (TAB3), à l'adresse Adr = v.

**8.** Procédé selon l'une des revendications précédentes, **caractérisé en ce que**

- concernant un pas dans le temps donné pour déterminer les valeurs de signaux reconstruites $m^{L_T + 1}$ pour chaque état de treillis m, des accès lecteur à la première mémoire sous forme de table (TAB1) et un accès lecteur à la troisième mémoire sous forme de table (TAB3) sont réalisés et chaque valeur de signal reconstruite est acquise par le biais de l'addition d'une contribution de treillis (s(v, j) ; TAB1), extraite de la première mémoire sous forme de table (TAB1) et d'une contribution des réactions aux décisions (DF ($j_1$, ..., $j_{dF}$) ; TAB2), extraite de la troisième mémoire sous forme de table.

**9.** Procédé selon la revendication 8, **caractérisé en ce que**

- des accès lecteurs sont réalisés à la première (TAB1) et troisième (TAB3) mémoire sous forme de table, dans le cadre d'une exécution des opérations ACS à un pas dans le temps donné, en incrémentant et / ou décrémentant les adresses d'accès respectives.

**10.** Mécanisme, conçu pour égaliser un signal de données, transmis par l'intermédiaire d'un canal, selon l'une des revendications précédentes, avec

- une première mémoire sous forme de table (TAB1), utilisant les emplacements de mémoire $m^{L_T + 1}$,
- une deuxième mémoire sous forme de table (TAB2), utilisant les emplacements de mémoire $m^{L-L_T}$, pour enregistrer les contributions des réactions aux décisions,
- une troisième mémoire sous forme de table (TAB3), utilisant les emplacements de mémoire $m^{L_T}$ , pour un enregistrement avec indexation par état des contributions des réactions aux décisions pour chaque pas dans le temps,
- un processeur (DSP), placé en relation d'accès avec les mémoires sous forme de table, pour calculer les métriques de transition lors de la réalisation des opérations ACS, L étant un nombre entier supérieur à zéro, $L_T$ étant le nombre des symboles, qui définissent un état de treillis et m indiquant leur valence.

**11.** Mécanisme selon la revendication 10, **caractérisé en ce que**

- le processeur (DSP) est conçu pour réaliser le calcul des opérations ACS sans assistance matérielle, dans le logiciel uniquement.

Fig.1a

Fig.1b

Fig.2

| v | Tr.-Zustand |
|---|---|
| 1 | 0000 |
| 2 | 0001 |
| 3 | 0010 |
| 4 | 0011 |
| ⋮ | ⋮ |
| 16 | 1111 |

| Adr | Zustand | s(j) | Trellis-Beitrag |
|---|---|---|---|
| 1 | 0000 | 0 | S(1,1) |
| 2 | 0000 | 1 | S(1,2) |
| 3 | 0001 | 0 | S(2,1) |
| 4 | 0001 | 1 | S(2,2) |
| ⋮ | ⋮ | ⋮ | ⋮ |
| 15 | 0111 | 0 | S(8,1) |
| 16 | 0111 | 1 | S(8,2) |
| 17 | 1000 | 0 | S(9,1) |
| 18 | 1000 | 1 | S(9,2) |
| 19 | 1001 | 0 | S(10,1) |
| ⋮ | ⋮ | ⋮ | ⋮ |
| 32 | 1111 | 1 | S(16,2) |

TAB1

Fig.4

Fig.3

TAB2

s($j_2$) s($j_1$)

| | | |
|---|---|---|
| 0 | 0 | DF (1,1) |
| 0 | 1 | DF (2,1) |
| 1 | 0 | DF (1,2) |
| 1 | 1 | DF (2,2) |

$DF(1,1) = h_5 \cdot 0 + h_6 \cdot 0 = 0$

$DF(2,1) = h_5 \cdot 1 + h_6 \cdot 0 = h_5$

$DF(1,2) = h_5 \cdot 0 + h_6 \cdot 1 = h_6$

$DF(2,2) = h_5 \cdot 0 + h_6 \cdot 1 = h_5 + h_6$

## Fig.5

TAB3

| Adr | DF-Beitrag |
|---|---|
| 1 | DF (1,2) |
| 2 | |
| 3 | |
| 4 | |
| ⋮ | ⋮ |
| 16 | |

Belegung z. Zeit k:
Zustand (Gl.7):

$s_{k-6}$ $s_{k-5}$ $s_{k-4}$ $s_{k-3}$ $s_{k-2}$ $s_{k-1}$ $s_k$

s(1) s(2) s(3) s(4)

| 1 | 0 | 0 | 0 | 0 | 0 | |

DF (1,2)    v = 1

## Fig.6

µC

DSP

SP    HW

## Fig.7a

µC

DSP

TAB3    TAB2 TAB1

## Fig.7b